(19) Europäisches Patentamt
European Patent Office
Office européen des brevets

(11) **EP 4 386 028 A1**

(12) **EUROPÄISCHE PATENTANMELDUNG**

(43) Veröffentlichungstag:
**19.06.2024   Patentblatt 2024/25**

(21) Anmeldenummer: **22212997.5**

(22) Anmeldetag: **13.12.2022**

(51) Internationale Patentklassifikation (IPC):
*C08G 18/18* (2006.01)       *C08G 18/22* (2006.01)
*C08G 18/40* (2006.01)       *C08G 18/42* (2006.01)
*C08G 18/48* (2006.01)       *C08G 18/76* (2006.01)
*C08G 18/79* (2006.01)       *B32B 15/18* (2006.01)
*B32B 27/06* (2006.01)       *C08G 18/02* (2006.01)

(52) Gemeinsame Patentklassifikation (CPC):
**C08G 18/794; B32B 15/18; B32B 27/065;
C08G 18/022; C08G 18/1808; C08G 18/1816;
C08G 18/225; C08G 18/4018; C08G 18/4208;
C08G 18/4837; C08G 18/7664;** C08G 2110/0025;
C08G 2110/005

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
• **Karafilidis, Christos**
  **51375 Leverkusen (DE)**

• **Welsch, Nicole**
  **51503 Rösrath (DE)**
• **Schumacher, Marc**
  **50129 Bergheim (DE)**
• **Dippe, Sabine**
  **51371 Leverkusen (DE)**
• **Abels, Rene**
  **51061 Köln (DE)**

(74) Vertreter: **Levpat**
**c/o Covestro AG**
**Gebäude K12**
**51365 Leverkusen (DE)**

(54) **ISOCYANAT- UND ISOCYANURATGRUPPEN ENTHALTENDE ZUSAMMENSETZUNG UND DARAUS HERGESTELLTE PUR/PIR-HARTSCHAUMSTOFFE**

(57)   Isocyanat- und Isocyanuratgruppen enthaltende Zusammensetzungen durch Reagierenlassen eines pMDI in Gegenwart eines Trimerisierungskatalysators und das Verfahren zur Herstellung eines PUR/PIR-Hartschaumstoffes aus dieser Zusammensetzung.

Die Erfindung betrifft ferner das Verfahren zur Herstellung der Isocyanat- und Isocyanuratgruppen enthaltenden Zusammensetzungen, die Herstellung von PUR/PIR-Hartschaumstoffen aus diesen Zusammensetzungen, die Hartschaumstoffe selbst und den Einsatz von derartigen Hartschaumstoffen.

EP 4 386 028 A1

**Beschreibung**

Die vorliegende Erfindung betrifft eine Isocyanat- und Isocyanuratgruppen enthaltende Zusammensetzung zur Herstellung von PUR/PIR-Hartschaumstoffen, sowie die Herstellung der Isocyanat- und Isocyanuratgruppen enthaltenden Zusammensetzungen unter teilweiser Trimerisierung von polymerem MDI (pMDI). Sie betrifft ferner die Herstellung von PUR/PIR-Hartschaumstoffen aus diesen Zusammensetzungen, die Hartschaumstoffe selbst und den Einsatz von derartigen Hartschaumstoffen.

Zur Herstellung von wärmedämmenden Schäumen, wie sie bei der Verkleidung von Hausfassaden eingesetzt werden, werden zur Verbesserung der Brandsicherheit vermehrt Polyisocyanurat-Polyurethanschaumsysteme (PUR/PIR-Schäume) eingesetzt, die durch einen deutlich - bezogen auf die Polyolkomponente - überstöchiometrischen Einsatz des für die Hartschaumherstellung üblichen polymeren Polyisocyanats hergestellt werden. Daher hat das eingesetzte polymere Polyisocyanat einen maßgeblichen Einfluss auf die Eigenschaften des Hartschaums. Eine wesentliche technische Eigenschaft ist, neben den Endeigenschaften wie Isolationswirkung und Endfestigkeit, auch die mechanische Festigkeit kurz nach der Herstellung des Hartschaums. Dadurch bestimmt sich die Zeit, nach der der Hartschaum mechanisch gehandhabt werden und gestapelt werden kann.

Es ist bekannt, dass die Zeitspanne, die zur Aushärtung eines PUR/PIR Schaums benötigt wird, durch verschiedene Faktoren beeinflusst werden kann, unter anderem durch den Einsatz von oligomeren (mehrkernigen) Polyisocyanaten. Der Aufbau von mehrkernigen Isocyanurat - Strukturen gelingt über eine Trimerisierung von Polyisocyanaten.

US 4,743,627 beschreibt PUR/PIR-Schäume besonders geringer Färbung aus Zusammensetzungen, die Isocyanat- und Isocyanuratgruppen enthalten. Das dort beschriebene Verfahren umfasst die Schritte: (a) Trimerisierung von polymerem MDI in Gegenwart eines Trimerisierungskatalysators unter Erhalt eines Isocyanurat-haltigen Polyisocyanats; (b) Desaktivierung des Trimerisierungskatalysators; und (c) Mischen des Isocyanurat-haltigen Polyisocyanats mit monomerem MDI unter Bildung eines Endprodukts mit einer Viskosität, die mit der Viskosität eines Standard pMDI vergleichbar ist und einen Zweikerngehalt von wenigstens 60 Gewichts-% aufweist. Das Endprodukt findet Verwendung in der Herstellung von Schäumen, die eine hellere Farbe aufweisen als solche Schäume auf der Basis von Standard-pMDI. Nachteil des Schrittes c), Mischen mit monomerem MDI, ist die Erhöhung der Isocyanat - Funktionalität der Mischung, was sich auf die Endeigenschaften wie Festigkeit des daraus hergestellten PUR/PIR-Hartschaums negativ auswirkt.

US 2009/105359 A1 betrifft ein Verfahren zur Herstellung eines flüssigen, Isocyanurat-modifizierten pMDI mit einer kontrollierten Viskosität. Das Verfahren weist die folgenden Schritte auf: (a) Trimerisierung von "konventionellem pMDI", einer trimerfreien Mischung aus monomerem und oligomerem MDI mit einer Viskosität zwischen 30 und 300 mPa*s, in Gegenwart eines Trimerisierungskatalysators unter Erhalt eines Isocyanurat-haltigen pMDI mit einer Viskosität bei 25 °C im Bereich von 2000 mPas bis 200.000 mPa*s; (b) Desaktivierung des Katalysators mit einem Katalysator-Desaktivator unter Erhalt einer Mischung enthaltend Isocyanurat-modifiziertes pMDI und desaktiviertem Katalysator; und (c) Mischen der Mischung aus Schritt (b) mit einer Menge trimerfreien pMDI, die ausreichend ist, um eine Mischung zu erhalten mit einer Viskosität bei 25 °C im Bereich von 400 mPas bis 20.000 mPas und einem Gehalt an freien NCO-Gruppen, der mit konventionellem pMDI mit einer Viskosität zwischen 30 und 1000 mPa*s vergleichbar ist.

Nachteil ist, dass dieses dreischrittige Verfahren zur Herstellung von Isocyanurat-haltigem pMDI, welches in einem Zwischenschritt über ein hochviskoses pMDI läuft, zu Fehlstellen bei der Herstellung von Isolationspanelen führt.

WO 2017/046274 A1 offenbart ein Verfahren zur Herstellung von Polyurethan-Polyisocyanurat-Hartschaumstoffen (PUR/PIR-Hartschaumstoffen) unter Verwendung eines Isocyanatblends aus überwiegend monomeren MDI mit polymerem MDI, welches anschließend teilweise trimerisiert wird. Die erfindungsgemäß eingesetzten Isocyanatblends enthalten 15-25 Gew.-% Isocyanuratgruppen und weisen Viskositäten von > 1000 mPa*s bei 25 °C auf, Blends mit niedrigeren Viskositäten und / oder höheren Isocyanuratanteilen erweisen sich hier als nachteilig, z.B. in der Lagerstabilität.

Aufgabe dieser Erfindung war es ausgehend von dem oben genannten Stand der Technik, eine Polyisocyanatkomponente zur Verfügung zu stellen, mit der PUR/PIR-Hartschaumstoffe mit guter Anfangsfestigkeit hergestellt werden können, die eine frühe Handhabung und Stapelbarkeit der daraus hergestellten Isolationsplatten zu erlauben und eine gute Flammwidrigkeit aufweisen. Gleichzeitig soll die Polyisocyanatkomponente die Nachteile der im Stand der Technik beschriebenen Verfahren (mangelnde Lagerstabilität, mangelhafte Schaumeigenschaften, Fehlstellen in produzierten Panelen) überwinden.

Diese Aufgabe konnte überraschenderweise durch ein Isocyanurat-haltiges pMDI mit einer Viskosität < 2000 mPa*s bei 25 °C, insbesondere < 1000 mPa*s bei 25 °C, und einem zahlengemittelten Molekulargewicht Mn von >350 g/mol gelöst werden, welches direkt durch Trimerisierung eines konventionellen polymeren MDI mit einem Gehalt an monomeren MDI von < 55 Gew.-% hergestellt wird und <15 Gew.-%, bevorzugt 5 - 15 Gew.-%, mehr bevorzugt 5 - 13 Gew.- % an Isocyanuratgruppen enthält.

Die Erfindung betrifft daher ein Verfahren zur Herstellung einer Isocyanat- und Isocyanuratgruppen enthaltenden Zusammensetzung A2, umfassend die Schritte:

1) Reagierenlassen eines Polyisocyanats **A1** in Gegenwart eines Trimerisierungskatalysators und

2) Abstoppen des Trimerisierungskatalysators mittels eines geeigneten Stoppers unter Erhalt der Zusammensetzung **A2**;

wobei es sich bei dem in Schritt 1) eingesetzten Polyisocyanat **A1** um polymeres MDI mit einem Gehalt an monomeren Diphenylmethandiisocyanat von < 55 Gew.-% und einer Viskosität von 100 bis 400 mPa*s bei 25 °C handelt und

wobei Schritt 2) durchgeführt wird, wenn die Zusammensetzung **A2** einen Isocyanuratgruppen - Anteil von 5 - <15 Gew.-% Isocyanuratgruppen, bevorzugt 5 - 13 Gew.-% Isocyanuratgruppen aufweist, und die Viskosität von **A2** < 2000 mPa*s bei 25 °C ist.

"Oligomeres MDI" bedeutet im Sinne dieser Anmeldung eine Polyisocyanatmischung aus höherkernigen Homologen des MDI, welche mindestens 3 aromatische Kerne und eine NCO-Funktionalität von mindestens 3 aufweisen.
Die Bezeichnung "polymeres Diphenylmethandiisocyanat", "polymeres MDI" oder pMDI wird im Kontext der vorliegenden Erfindung verwendet, um eine Mischung aus oligomerem MDI und optional monomerem MDI zu bezeichnen. Typischerweise ist der Monomergehalt eines polymeren MDIs im Bereich von 30 - 50 Gew.-%, bezogen auf die Gesamtmasse des pMDI.
Das Polyisocyanat **A1** enthält < 55 Gew.-% monomeres MDI, insbesondere ≤ 50 Gew.-% monomeres MDI und weist eine Viskosität von 100 bis 400 mPa*s bei 25 °C, bevorzugt von 120 bis 350 mPa*s bei 25 °C, besonders bevorzugt von 130 bis 300 mPa*s bei 25 °C, auf. Bevorzugt eingesetzt wird ein polymeres MDI mit folgender Zusammensetzung:
35-50 Gew.-% 4,4'-Methylidendiphenyldiisocyanat, 1-10 Gew.-% 2,4'-Methylidendiphenyldiisocyanat, > 0 bis ≤ 5 Gew.-% 2,2'-Methylidendiphenyldiisocyanat und 35 bis < 64 Gew.-% höhere Homologe des Methylidendiphenyldiisocyanats (mit ≥ 3 aromatischen Kernen). Besonders bevorzugt eingesetzt wird eine Zusammensetzung von 40-50 Gew.-% 4,4'-Methylidendiphenyldiisocyanat, 1-5 Gew.-% 2,4'-Methylidendiphenyldiisocyanat, > 0 bis ≤ 5 Gew.-% 2,2'-Methylidendiphenyldiisocyanat und 40 bis < 60 Gew.-% höhere Homologe des Methylidendiphenyldiisocyanats (mit ≥ 3 aromatischen Kernen).
Das Polyisocyanat **A1** wird einer Trimerisierungsreaktion unterworfen [Schritt (1)]. Die Trimerisierungsreaktion ist an sich bekannt und beispielsweise beschrieben in WO 2009/039332 A, [00015] - [00021], worauf hier Bezug genommen wird. Geeignete Trimerisierungskatalysatoren sind z.B. Mannichbasen des Phenols oder von Phenolderivaten wie z.B. 2,4,6-Tris(dimethylaminomethyl)phenol und 4,4'-Isopropylidenebis[2,6-bis(dimethylaminomethyl)-phenol], Kaliumacetat und/oder aliphatische quaternäre Ammoniumsalze.
Der Gehalt an Isocyanuratgruppen (in Gewichtsprozent) in dem nach der Trimerisierungsreaktion erhaltenen Isocyanat- und Isocyanuratgruppen enthaltenden Zusammensetzung **A2** wird wie folgt bestimmt:

$$\text{Isocyanurat\% (A2)} = (\text{NCO\% (A1)} - \text{NCO\% (A2)}) / (\text{NCO\% (A1)} / 2) * 100$$

Die Bestimmung des Gewichtsanteils an NCO-Gruppen erfolgt gemäß DIN EN 1242:2013.
Die Viskositätsangaben in dieser Anmeldung beziehen sich auf Viskositäten bestimmt nach DIN 53019-1 (2008-09) (ohne Lösemittel).
Die Zusammensetzung der Isocyanat- und Isocyanuratgruppen enthaltenden Zusammensetzungen A2 bzw. der Isocyanatkomponente A kann mittels Gelpermeationschromatographie (GPC) nach DIN 55672-1:2016-03 bei 35° C in Tetrahydrofuran als Lösungsmittel bestimmt werden.
Die Zusammensetzung A2 bzw. die Isocyanatkomponente A weist im GPC einen siebten Peak ("Peak G", zugehörend zu der Fraktion mit dem siebtniedrigsten Molekulargewicht) auf, dessen Peakfläche bevorzugt > 4,6 Flächen-% beträgt.
Die Zusammensetzung A2 bzw. die Isocyanatkomponente A weist bevorzugt ein zahlengemitteltes Molekulargewicht Mn von >350 g/mol auf.
Die Zusammensetzung **A2** weist

- einen Isocyanuratgruppen - Anteil von 5 - <15 Gew.-% Isocyanuratgruppen, bevorzugt 5 - 13 Gew.-% Isocyanuratgruppen,

- ein zahlengemitteltes Molekulargewicht Mn von >350 g/mol, und

3

- im GPC einen siebten Peak, zugehörend zu der Fraktion mit dem siebtniedrigsten Molekulargewicht, mit einer Peakfläche von bevorzugt > 4,6 Flächen-%, auf, und

- die Viskosität von **A2** ist < 2000 mPa*s bei 25 °C, bevorzugt < 1000 mPa*s bei 25 °C.

Die Trimerisierungsreaktion kann durch Zugabe eines Desaktivators kontrolliert beendet werden. Prinzipiell ist jedes Säurechlorid oder jede Brønsted-Säure einsetzbar. Als Säurechloride können unter anderem Acetylchloride, Benzoylchloride, Sulfonylchloride und deren Mischungen eingesetzt werden. Ein bevorzugtes Beispiel für Säurechloride ist Benzoylchlorid, ein weiteres bevorzugtes Beispiel ist Isophthaloyldichlorid. Als Säuren können unter anderem Salzsäure, Schwefelsäure, Essigsäure, Oxalsäure, Phosphorsäure, Methansulfonsäure, Trifluormethansulfonsäure, Benzol-, Toluol- oder Xylolsulfonsäure eingesetzt werden. Ein bevorzugtes Beispiel für Säuren ist Salzsäure. Das Säurechlorid oder die Brønsted-Säure kann auch als Lösung oder Dispersion in organischen Lösungsmitteln, monomerem MDI oder polymerem MDI eingesetzt werden.

Die nach Schritt 2) erhaltene Isocyanat- und Isocyanuratgruppen enthaltende Zusammensetzung A2 kann alleine oder in Mischung mit weiteren Isocyanaten zur Herstellung von Polymeren, insbesondere PUR- und PUR/PIR - Hartschaumstoffen eingesetzt werden. Es ist z.B. möglich, durch Abmischung mit weiteren Polyisocyanaten eine bestimmte Viskosität einzustellen. Hierzu eignen sich die für die Polyurethanchemie bekannten aliphatischen, cycloaliphatischen, araliphatischen Diund/oder Polyisocyanate und insbesondere aromatischen Isocyanate. Insbesondere können die Isomere und Oligomere des MDI und TDI eingesetzt werden.

Ein weiterer Aspekt der vorliegenden Erfindung ist die Isocyanat- und Isocyanuratgruppen enthaltende Zusammensetzung **A2,** welche durch das erfindungsgemäße Verfahren erhältlich ist, sowie eine Isocyanatkomponente **A** umfassend die Zusammensetzung **A2.**

Die Erfindung betrifft ebenfalls ein Verfahren zur Herstellung eines PUR/PIR-Hartschaumstoffes durch Umsetzung eines PUR/PIR-Systems aus einer Isocyanatkomponente **A** und einer Polyolformulierung **B** in Gegenwart von Treibmitteln **C** und Katalysatoren **D,** wobei die Isocyanatkomponente **A** eine erfindungsgemäße Isocyanat- und Isocyanuratgruppen enthaltende Zusammensetzung **A2** umfasst.

Die PUR/PIR-Systeme finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Durch Umsetzung des PUR/PIR-Systems sind die PUR/PIR-Hartschaumstoffe erhältlich. Bei der Umsetzung werden die Isocyanatkomponente **A** und die Polyolformulierung **B** im Allgemeinen in solchen Mengen zur Umsetzung gebracht, dass die Isocyanat-Kennzahl des Schaums $\geq$ 250 bis $\leq$ 450, bevorzugt $\geq$ 320 bis $\leq$ 400 beträgt.

Unter der Isocyanat-Kennzahl (auch Kennzahl oder Isocyanat-Index genannt) wird dabei der Quotient aus der tatsächlich eingesetzten Stoffmenge [Mol] an Isocyanat-Gruppen und der für vollständigen Umsatz aller Isocyanat-reaktiven Gruppen stöchiometrisch benötigten Stoffmenge [Mol] an Isocyanat-Gruppen, multipliziert mit 100, verstanden. Da für die Umsetzung eines Mols einer Isocyanat-reaktiven Gruppe ein Mol einer Isocyanat-Gruppe benötigt wird, gilt:

$$\text{Kennzahl} = (\text{Mole Isocyanat-Gruppen} / \text{Mole Isocyanat-reaktive Gruppen}) \cdot 100$$

Die Isocyanatkomponente **A** hat insbesondere die folgenden Eigenschaften :

<15 Gew.-% Isocyanuratgruppen, bevorzugt <13 Gew.-% Isocyanuratgruppen,
20 - 50 Gew.-%, bevorzugt 20 - 40 Gew.-%, monomeres MDI,
NCO- Gehalt von 23 - 30 Gew.-% (DIN EN 1242:2013),
jeweils bezogen auf das Gesamtgewicht der Isocyanatkomponente **A,**
und eine Viskosität von < 2000 mPa*s bei 25 °C, bevorzugt < 1000 mPa*s bei 25 °C.

Zur Herstellung der Isocyanatkomponente **A** kann die erfindungsgemäße Isocyanat- und Isocyanuratgruppen enthaltende Zusammensetzung **A2** optional mit weiteren Isocyanaten, z.B. zur Einstellung einer niedrigeren oder höheren Viskosität abgemischt werden. In einer bevorzugten Ausführungsform wird die erfindungsgemäße Isocyanat- und Isocyanuratgruppen enthaltende Zusammensetzung **A2** ohne Abmischung mit weiteren Isocyanaten eingesetzt. Als Isocyanate für die Abmischung mit der erfindungsgemäßen Isocyanat- und Isocyanuratgruppen enthaltenden Zusammensetzung **A2** kommen die üblichen aliphatischen, cycloaliphatischen, araliphatischen Diund/oder Polyisocyanate und insbesondere aromatische Isocyanate zum Einsatz, welche aus der Polyurethanchemie bekannt sind. Aromatische Isocyanate, insbesondere die Homologen und Isomeren der MDI-Reihe sind besonders bevorzugt. Weiterhin kann es sich bei den zur Abmischung geeigneten Isocyanaten um Polyurethan-Prepolymere bzw. modifizierten Isocyanate handeln. Der Begriff "Polyurethan-Prepolymer" bezeichnet insbesondere reaktive Intermediate in der Reaktion von Isocyanaten zu Polyurethan-Polymeren. Sie werden hergestellt durch die Reaktion einer Polyolkomponente mit einem Überschuss einer Isocyanatkomponente. Bevorzugte modifizierte Isocyanate schließen ein: Harnstoff modifizierte Isocyanate; Biuret-modifizierte Isocyanate; Urethan-modifizierte Isocyanate; Isocyanurat-modifizierte Isocyanate; Allophanat-modifizierte Isocyanate; Carbodiimid-modifizierte Isocyanate; Uretdion-modifizierte Isocyanate und Uretonimin-modifizierte Isocyanate. Solche modifizierten Isocyanate sind im Handel verfügbar und werden durch Reaktion eines Isocyanats mit einer geringeren als der stöchiometrischen Menge einer Isocyanat-reaktiven Verbindung oder mit sich selbst hergestellt.

Insbesondere können die Isomere und Oligomere des MDI und TDI zur Abmischung eingesetzt werden.

Als Polyole für die Polyolformulierung **B** kommen bevorzugt Verbindungen auf Basis von Polyesterolen oder Polyetherolen zum Einsatz. Die Funktionalität der Polyetherole und/oder Polyesterole beträgt im Allgemeinen 1,9 bis 8, bevorzugt 1,9 bis 7, besonders bevorzugt 1,9 bis 6.

Die Polyole weisen insbesondere eine Hydroxylzahl von größer als 70 mg KOH/g, bevorzugt größer als 100 mg KOH/g, besonders bevorzugt größer als 120 mg KOH/g auf. Als Obergrenze der Hydroxylzahl hat sich im Allgemeinen 1000 mg KOH/g, bevorzugt 900 mg KOH/g, besonders 800 mg KOH/g bewährt. Die oben angegebenen OH-Zahlen beziehen sich auf die Gesamtheit der Polyole in der Polyolformulierung **B,** was nicht ausschließt, dass einzelne Bestandteile der Mischung höhere oder niedrigere Werte aufweisen.

Bevorzugt enthält die Polyolformulierung **B** Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1, 3-Propylenoxid, 1,2-bzw. 2, 3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen Alkohole in Betracht, wie beispielsweise Glycerin, Trimethylolpropan (TMP), Pentaerythrit, Saccharose, Sorbit, sowie Amine, wie beispielsweise Methylamin, Ethylamin, Isopropylamin, Butylamin, Benzylamin, Anilin, Toluidin, Toluoldiamin, Naphthylamin, Ethylendiamin, Diethylentriamin, 4,4'-Methylendianilin, 1,3-Propandiamin, 1,6-Hexandiamin, Ethanolamin, Diethanolamin, Triethanolamin und ähnliche. Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin (TDA) und Diethanolamin bzw. Ethanolamin und ähnliche verwendet werden. Bevorzugt werden als Startermolekül TMP und TDA verwendet.

Die Polyolformulierung **B** kann als weiteren Bestandteil Vernetzer enthalten. Unter Vernetzer werden Verbindungen verstanden, die ein Molekulargewicht von 60 bis weniger als 400 g/mol aufweisen und mindestens 3 gegenüber Isocyanaten reaktive Wasserstoffatome aufweisen. Ein Beispiel hierfür ist Glycerin. Die Vernetzer werden im allgemeinen in einer Menge von 1 bis 10 Gew.-%, bevorzugt von 2 bis 6 Gew.-%, bezogen auf das Gesamtgewicht der Polyolformulierung B (jedoch ohne physikalische Treibmittel), eingesetzt.

Die Polyolformulierung **B** kann ebenfalls Kettenverlängerungsmittel enthalten, die der Erhöhung der Vernetzungsdichte dienen. Unter Kettenverlängerungsmittel werden Verbindungen verstanden, die ein Molekulargewicht von 60 bis weniger als 400 g/mol aufweisen und 2 gegenüber Isocyanaten reaktive Wasserstoffatome aufweisen. Beispiele hierfür sind Butandiol, Diethylenglykol, Dipropylenglykol sowie Ethylenglykol. Die Kettenverlängerungsmittel werden im Allgemeinen in einer Menge von 2 bis 20 Gew.-%, bevorzugt von 4 bis 15 Gew.-%, bezogen auf das Gesamtgewicht der Polyolformulierung B (jedoch ohne physikalische Treibmittel), eingesetzt.

Vernetzer und Kettenverlängerungsmittel können in der Polyolmischung einzeln oder in Kombination eingesetzt werden.

Zur Herstellung der PUR/PIR-Hartschäume werden weiterhin chemische und/oder physikalische Treibmittel **(C)** eingesetzt.

Als chemische Treibmittel sind Wasser oder Carbonsäuren, insbesondere Ameisensäure als chemisches Treibmittel bevorzugt. Das chemische Treibmittel wird im Allgemeinen in einer Menge von 0,1 bis 5 Gew.-%, insbesondere von 1,0 bis 3,0 Gew.-%, bezogen auf das Gewicht der Komponente **B,** eingesetzt.

Als physikalische Treibmittel versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Diese werden üblicherweise in einer Menge von 1 bis 30 Gew.-%, bevorzugt 2 bis 25 Gew.-%, besonders bevorzugt 3 bis 20 Gew.-%, bezogen auf das Gesamtgewicht der Komponente **B** eingesetzt.

Zur Herstellung der PUR/PIR-Hartschäume werden ferner Katalysatoren **D** eingesetzt. Als Katalysatoren **D** zur Beschleunigung der Reaktion der Hydroxylgruppen enthaltenden Verbindungen der Komponente **B** mit den Isocyanatgruppen der Komponente **A** werden üblicherweise und bevorzugt organische Zinnverbindungen, wie Zinn-(II)-salze von organischen Carbonsäuren, und/oder basische Aminverbindungen, bevorzugt tertiäre Amine, wie beispielsweise Triethylamin, und/oder 1,4-Diaza-bicyclo-(2,2,2)-octan. Als Katalysatoren D zur Bildung von Isocyanuratgruppen bei der Herstellung der PUR/PIR-Hartschäume werden üblicherweise Metallcarboxylate, bevorzugt Kaliumacetat oder Kaliumoctoat und deren Lösungen verwendet. In PUR/PIR-Hartschäumen wird ein Gemisch von Katalysatoren zur Beschleunigung der Reaktion der Hydroxylgruppen enthaltenden Verbindungen der Komponente **B** mit den Isocyanatgruppen der Komponente **A** und von Katalysatoren zur Bildung von Isocyanuratgruppen verwendet. Die Katalysatoren werden im Allgemeinen in einer Menge von 0,001 bis 5 Gew.-%, Katalysator, bezogen auf das Gewicht der Komponente **B,** eingesetzt.

Dem PUR/PIR-System können gegebenenfalls auch noch weitere Hilfs- und Zusatzstoffe **E** einverleibt werden. Unter solchen werden die im Stand der Technik bekannten und üblichen Hilfsund Zusatzstoffe verstanden. Diese können der Polyolkomponente **B** oder direkt der Reaktionsmischung zugesetzt werden. Genannt seien beispielsweise oberflächenaktive Substanzen, Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Die Erfindung ist ebenfalls auf einen PUR/PIR-Hartschaumstoff gerichtet, der durch ein erfindungsgemäßes Verfahren erhältlich ist. PUR/PIR-Hartschaumstoffe im Sinne der vorliegenden Erfindung sind insbesondere solche PUR/PIR-Schäume, deren Rohdichte gemäß DIN EN ISO 3386-1-98 in der Fassung vom September 2010 im Bereich von 15 kg/m$^3$ bis 300 kg/m$^3$ liegt und deren Druckfestigkeit nach DIN EN 826 in der Fassung vom Mai 1996 im Bereich von 0,1 MPa bis 3 MPa liegt.

Überraschend wurde gefunden, dass diese PUR/PIR Hartschäume eine verbesserte Stapelbarkeit gegenüber Hartschäumen produziert mit einem konventionellem MDI oder einem pMDI mit höheren Isocyanurat-Anteilen aufweisen. Diese wird gemessen in Form der Eindrucktiefe mit einem definierten Gewicht und definierter Stempelfläche (Beschreibung siehe experimenteller Teil) nach der Herstellung, korreliert also mit der Aushärtungsgeschwindigkeit. Gleichzeitig weisen die PUR/PIR Hartschäume auch eine sehr gute Lagerstabilität und Schaumeigenschaften und verbesserte Flammwidrigkeiten auf und weisen wenig Fehlstellen in den produzierten Paneelen auf.

Der erfindungsgemäße PUR/PIR-Hartschaumstoff kann daher vorteilhaft als Isolationsschaum in der Herstellung von Verbundelementen genutzt werden.

Ebenso betrifft die Erfindung ein Verbundelement, umfassend eine Hartschaumschicht, welche einen erfindungsgemäßen PUR/PIR-Hartschaumstoff enthält, sowie mindestens eine Deckschicht. Die Deckschicht wird hierbei zumindest teilweise von einer den erfindungsgemäßen PUR-/PIR-Hartschaum umfassenden Schicht kontaktiert. Typischerweise ist das Material der Deckschicht Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte.

In einer weiteren Ausführungsform des Verbundelements ist dieses in Form eines Isolationspaneels.

Experimenteller Teil:

Eingesetzte Methoden:

Formtemperatur: Temperatur in °C der zur Verschäumung eingesetzten Form.

Mischzeit: die Zeit in Sekunden, während der das Reaktionsgemisch gemischt wird.

Startzeit: die Zeit in Sekunden, die vom Beginn des Mischens bis zum erkennbaren Start der Reaktion vergeht.

Abbindezeit: die Zeit in Sekunden, die vom Beginn des Mischens bis zur Verfestigung der Schaumoberfläche vergeht.

Klebfreizeit: die Zeit in Sekunden, die vom Beginn des Mischens vergeht, bis die Schaumoberfläche sich nicht mehr klebrig anfühlt.

Eindrucktiefe (nach 2,5 min / 5 min): Die Eindrucktiefe wird an frisch hergestellten Laborschäumen in Testpäckchen mit einer Grundfläche von 20×20 cm$^2$ durchgeführt. Dabei wird die Eindringtiefe eines Stempels mit 3,5 cm Durchmesser und mit 6 kg Stempelgewicht nach den angegebenen Zeitspannen während der Aushärtephase bestimmt.

Zellgröße: Skalierung zwischen 1 und 6; wobei 1 sehr fein bzw. sehr gleichmäßig und 6 sehr grob bzw. unregelmäßig bedeutet

Oberfläche/Schauminnenfläche: qualitative Unterscheidung zwischen spröde, sandig und zäh

Kernrohdichte: DIN EN ISO 845:2009 "Schaumstoffe aus Kautschuk und Kunststoffen - Bestimmung der Rohdichte"

Isocyanatgehalt: DIN EN 1242:2013 "Bestimmung des Isocyanat-Gehaltes"

Viskosität: DIN 53019-1:2008 "Viskosimetrie - Messung von Viskositäten und Fließkurven mit Rotationsviskosimetern". Die Messung erfolgte ohne Lösemittel.

Hydroxylzahl (OH-Zahl): die Bestimmung der OH-Zahl erfolgte gemäß der Vorschrift der DIN 53240-2:2007.

Dimensionsstabilität (Dim.Stab.): Die Schaumprobe wird mindestens 24h bei 20-25 °C gelagert, bevor aus dem Kern zwei Schaumstoffwürfel mit den Dimensionen $10 \cdot 10 \cdot 10$ cm$^3$ entnommen werden. Nach Markierung der drei Raumrichtungen eines jeden Würfels wurden diese mit einem Messschieber vermessen und je einer bei -22 °C und 100 °C für 24 Stunden gelagert. Danach werden die Würfel erneut bei Raumtemperatur vermessen. Die Dimensionsstabilität ist die prozentuale Änderung der Kantenlänge $\Delta L$ aller drei Raumrichtungen A, B und C, wobei C immer der Aufschäumrichtung entspricht. $\Delta L = (L - OL)/OL \cdot 100\%$ mit L = Kantenlänge des Prüfkörpers nach Lagerung, OL = Kantenlänge des Prüfkörpers vor Lagerung. Ein Schaum hat diesen Test bestanden, wenn die Veränderung in jeder Richtung bei -22 °C und 100 °C unter 1% ist.

Schweizer Brandtest: Test nach Brandschutzrichtlinie Nr. 585.113 der Vereinigung Kantonaler Feuerversicherungen VKF (SAR 585.113; Schweiz; Stand 23. März 2015; Anhang 5 zur Brandschutzverordnung).

KBT : (Klein-Brenner-Test) Flammschutzprüfung nach DIN EN ISO 11925-2 (2020-07) zur Klassifizierung der Flammschutzeigenschaften

Compression Strength: Druckfestigkeit bei 10% Stauchung in Laufrichtung nach DIN EN 826-01 (2013-05)

Wärmeleitfähigkeit: Wärmeleitzahl nach DIN EN 12667-01 (2001-05) (bei 10 °C oder 70°C, 0-Wert); 0-Wert bedeutet, dass direkt nach der Herstellung gemessen wird ohne vorherige Lagerung.

Der Gehalt an Isocyanuratgruppen in den ISOCYANATEN 1 und 2 wird nach folgender Gleichung bestimmt:

$$\text{Isocyanurat\% (ISOCYANAT 1 bzw. 2)} = (\text{NCO\% (MDI200)} - \text{NCO\% (ISOCYANAT 1 bzw. 2)}) / (\text{NCO\% (MDI200)} /2) * 100$$

Lagertest: Die Lagerfähigkeit der Isocyanate wurde qualitativ bewertet, indem die Proben über einen Zeitraum von 3 Monaten im Labor bei Raumtemperatur verwahrt und visuell beurteilt wurden.

GPC Gel-Permeations-Chromatographie: Der Gehalt der verschiedenen Spezies wurde mittels Gelpermeationschromatographie (GPC) nach DIN 55672-1:2016-03 bei 35° C in Tetrahydrofuran als Lösungsmittel bestimmt (SECurity GPC-System von PSS Polymer Service, Flussrate 0,6 ml/min; Säulen: $2 \times$ PSS SDV 50A 5$\mu$m, $2 \times$ PSS SDV 100A 5$\mu$m, $8 \times 300$ mm; RI-Detektor). Zur Kalibrierung wurden Proben von Polystyrolstandards mit bekanntem Molekulargewicht verwendet. Die Berechnung des zahlenmittleren Molekulargewichts wurde mit Hilfe der Software PSSWin GPC durchgeführt. In dem Chromatogramm werden die Peaks wie in Abbildung 1 gezeigt, benannt. Der Peak mit dem siebtniedrigsten Molekulargewicht erhält die Bezeichnung "Peak G".

Eingesetzte Materialien:

MDI200: Desmodur 44V20L, polymeres Diphenylmethandiisocyanat (Covestro); Isocyanatgehalt 31,5 Gew.%, Viskosität bei 25°C ca. 200 mPas
MDI700: Desmodur 44V70L, polymeres Diphenylmethandiisocyanat (Covestro); Isocyanatgehalt 30,9 Gew.-%, Viskosität bei 25°C ca. 700 mPas
Benzoylchlorid: bezogen von Sigma-Aldrich; 99,5%ig; Siedepunkt 198 °C
Tris(dimethylamino-methyl)phenol: bezogen von Sigma-Aldrich 95%ig; Brechungsindex n20/D 1.516, Siedepunkt: 130-135 °C
POLYOL 1: aromatisches Polyesterpolyol (Synthesia Technology) mit einer OH-Zahl von 240 mg/kg KOH, einer rechnerisch aus den Rohstoffen ermittelte Funktionalität von 1,9 und einer Viskosität von 1500 mPa*s bei 25°C
POLYOL 2: Polyetherdiol (Covestro) mit einer OH-Zahl von 28 mg/kg KOH und einer Viskosität von 860 mPa*s bei 25°C, hergestellt mit 1,2-Propylenglykol als Starter und einem Gemisch aus Ethylenoxid und Propylenoxid im Verhältnis von 30 zu 70 Gewichtsteilen
POLYOL 3: aromatisches Polyesterpolyol (Covestro) mit einer OH-Zahl von 370 mg/kg KOH, einer rechnerisch aus den Rohstoffen ermittelten Funktionalität von 1,9 und einer Viskosität von 1400 mPa*s bei 25°C
POLYOL 4: aromatisches Polyesterpolyol (Covestro) mit einer OH-Zahl von 795 mg/kg KOH, einer rechnerisch aus den Rohstoffen ermittelten Funktionalität von 2,0 und einer Viskosität von 1400 mPas bei 25°C

POLYOL 5: aromatisches Polyesterpolyol (Stepan Company) mit einer OH-Zahl von 240 mg/kg KOH, einer Säurezahl von 0,8 und einer Viskosität von 3000 mPa*s bei 25°C

Triethylphosphat: Flammschutzmittel (Lanxess)

Tegostab B8443: Schaumstabilisator (Evonik)

Desmorapid 1792: Kaliumacetat-Katalysator (Covestro)

Desmorapid DB: Benzyldimethylamin-Katalysator (Covestro)

n-Pentan: n-Pentan als Blähmittel (Aldrich)

Cyclopentan: Cyclopentan als Blähmittel (Aldrich)

Isopentan: Isopentan als Blähmittel (Aldrich)

HAFTVERMITTLER: 2K-Haftvermittler (Covestro)

TCPP: Fyrol PCF Flammschutzmittel (ICL)

Tegostab B8421: Schaumstabilisator (Evonik)

Desmorapid PV: Pentamethyldiethylenamin-Katalysator (Covestro)

Kosmos 75 MEG: Kalium-Octoat-Katalysator (Biesterfeld)

POLYOLMISCHUNG 1: ein Gemisch bestehend aus folgenden Komponenten:

| POLYOL 1 | Gew.-Tle. | 79 |
|---|---|---|
| POLYOL 2 | Gew.-Tle. | 10 |
| TRIETHYLPHO SPHAT | Gew.-Tle. | 8 |
| TEGOSTAB B8443 | Gew.-Tle. | 2,5 |
| POLYOL 3 | Gew.-Tle. | 2 |
| POLYOL 4 | Gew.-Tle. | 0,5 |
| WASSER | Gew.-Tle. | 0,5 |

Beispiel 1: Herstellung von ISOCYANAT 1 (erfindungsgemäß)

99,80 Gew.-Teile MDI200 werden unter Überlagerung mit trockenem Stickstoff vorgelegt und auf 60 °C aufgeheizt. 0,17 Gew.-Teile Tris(dimethylamino-methyl)phenol werden hinzudosiert. Die Reaktionstemperatur wird bei 60 +/- 2 °C konstant gehalten. Bei Erreichen der Zielviskosität von 700 mPas bei 25 °C werden 0,03 Gew.-Teile Benzoylchlorid zugegeben und 20 min bei 60 °C gerührt. Viskosität, NCO-Gehalt und Isocyanuratgruppen-Gehalt von ISOCYANAT 1: 678 mPas bei 25°C; NCO-Gehalt: 29,92 % NCO; 10,0 Gew.-% Isocyanuratgruppen.

Das GPC von ISOCYANAT 1 ist in Abbildung 1 wiedergegeben, Tabelle 1 zeigt den Vergleich der Peakflächen und der zahlengemittelten Molekulargewichte erhalten aus den Gelpermeationschromatogrammen von ISOCYANAT 1 und ISOCYANAT 2.

Abbildung 1: RI-Signal des Gelpermeationschromatogramms von ISOCYANAT 1 mit Beschriftung der Peaks

Die zu Peak G gehörende Fläche beträgt 5,0 Flächen-%.

Das zahlengemittelte Molekulargewicht Mn beträgt 356 g/mol.

Beispiel 2*: Herstellung von ISOCYANAT 2 (Vergleich, nicht erfindungsgemäß)

99,80 Gew.-Teile MDI200 werden unter Überlagerung mit trockenem Stickstoff vorgelegt und auf 60 °C aufgeheizt. 0,17 Gew.-Teile Tris(dimethylamino-methyl)phenol werden hinzudosiert. Die Reaktionstemperatur wird bei 60 +/- 2 °C konstant gehalten. Bei Erreichen der Zielviskosität von 3000 mPas bei 25 °C werden 0,03 Gew.-Teile Benzoylchlorid zugegeben und 20 min bei 60 °C gerührt. Viskosität des Zwischenproduktes: 3360 mPas bei 25°C; NCO-Gehalt Zwischenprodukt: 28,52 % NCO.

Nach Abbruch der Trimerisierungsreaktion werden zur Einstellung der gleichen Viskosität und Trimergehalts wie in ISOCYANAT 1 anschließend 94,97 Gew.-Teile MDI200 hinzugegeben. Das nach der Mischung erhaltene ISOCYANAT 2 weist eine Viskosität von 705 mPas bei 25°C, einen NCO-Gehalt von 29,91 %NCO und 10,0 Gew.-% Isocyanuratgruppen auf.

Die zu Peak G gehörende Fläche beträgt 4,4 Flächen-%.

Das zahlengemittelte Molekulargewicht Mn beträgt 346 g/mol.

Tabelle 1: Vergleich der Peakflächen und der zahlengemittelten Molekulargewichte erhalten aus den Gelpermeationschromatogrammen von ISOCYANAT 1 un

| Einheit | Peak | Elutionsvolumen | Molekulargewicht | ISOCYANAT 1 | ISOCYANAT 2* |
|---|---|---|---|---|---|
| | | [ml] | [Da] | F [%] | F [%] |
| | A | 36,23 | 196,0 | 33,5 | 34,7 |
| | B | 35,3 | 248,9 | 0,1 | 0,1 |
| | C | 33,98 | 350,3 | 18,4 | 19,4 |
| | D | 32,71 | 496,6 | 9,1 | 9,6 |
| | E | 31,78 | 652,7 | 5,1 | 5,4 |
| | F | 31,15 | 785,2 | 4,8 | 4,3 |
| | G | 30,58 | 929,1 | 5,0 | 4,4 |
| | H | 30,09 | 1070,4 | 4,1 | 3,7 |
| | I | 29,66 | 1208,7 | 3,1 | 3,0 |
| | J | 29,43 | 1284,9 | 2,4 | 2,8 |
| | K | 29,09 | 1410,8 | 14,4 | 12,6 |
| Mn [g/mol] | | | | 356 | 346 |

Beispiele 3 - 6: Herstellung von PUR/PIR-Schäumen

Die so hergestellten Isocyanat- und Isocyanuratgruppen enthaltenden Zusammensetzungen ISOCYANAT 1 und 2 werden für die Herstellung von PUR/PIR - Hartschäumen verwendet und dabei mit einer standardmäßig verwendeten Isocyanuratgruppen - freien Polyisocyanatzusammensetzung ähnlicher Viskosität verglichen. In der nachfolgender Tabelle 2 ist das erfindungsgemäße Beispiel 5 mit der Isocyanat- und Isocyanuratgruppen enthaltenden Zusammensetzung ISOCYANAT 1 jeweils mit der gleichen Polyolformulierung verschäumt, bei den Vergleichsbeispielen Beispiel 3* und Beispiel 4* mit der nur Isocyanatgruppen enthaltenden Zusammensetzung MDI700 und bei dem Vergleichsbeispiel Beispiel 6* mit der Isocyanat- und Isocyanuratgruppen enthaltenden Zusammensetzung ISOCYANAT 2. Zur besseren Vergleichbarkeit wurde die Isocyanatzusammensetzung jeweils zu gleichen Gewichtsteilen ausgetauscht, wodurch sich leichte Variationen beim Index ergeben.

Tabelle 2: Laborverschäumung

| Parameter | Einheit | Beispiel 3* | Beispiel 4* | Beispiel 5 | Beispiel 6* |
|---|---|---|---|---|---|
| POLYOL 1 | Gew.-Tle. | 79 | 79 | 79 | 79 |
| POLYOL 2 | Gew.-Tle. | 10 | 10 | 10 | 10 |
| Triethylphosphat | Gew.-Tle. | 8 | 8 | 8 | 8 |
| Tegostab B8443 | Gew.-Tle. | 2,5 | 2,5 | 2,5 | 2,5 |
| POLYOL 3 | Gew.-Tle. | 2 | 2 | 2 | 2 |
| POLYOL 4 | Gew.-Tle. | 0,5 | 0,5 | 0,5 | 0,5 |
| Wasser | Gew.-Tle. | 0,5 | 0,5 | 0,5 | 0,5 |

(fortgesetzt)

| Parameter | Einheit | Beispiel 3* | Beispiel 4* | Beispiel 5 | Beispiel 6* |
|---|---|---|---|---|---|
| Desmorapid 1792 | Gew.-Tle. | 2,7 | 2,7 | 2,7 | 2,7 |
| Desmorapid DB | Gew.-Tle. | 1,1 | 1,1 | 1,1 | 1,1 |
| n-Pentan | Gew.-Tle. | 13,5 | 13,5 | 13,5 | 13,5 |
| MDI700 | Gew.-Tle. | 205 | 205 | | |
| ISOCYANAT 1 | Gew.-Tle. | | | 205 | |
| ISOCYANAT 2* | Gew.-Tle. | | | | 205 |
| Index (100 NCO/OH) | | 329 | 329 | 319 | 319 |
| Formtemperatur | °C | 60 | 60 | 60 | 60 |
| Mischzeit | s | 6 | 6 | 6 | 6 |
| Startzeit | s | 11 | 12 | 11 | 12 |
| Abbindezeit | s | 32 | 33 | 31 | 31 |
| Klebfreizeit | s | 45 | 45 | 40 | 40 |
| Eindrucktiefe (2,5 min) | mm | 7,3 | 7,0 | 5,1 | 4,1 |
| Eindrucktiefe (5 min) | mm | 8,3 | 8,0 | 5,7 | 4,6 |
| Kernrohdichte | kg/m$^3$ | 39,4 | 40,8 | 38,7 | 38,7 |
| Dimensionsstabilität n.24h, - 22°C | % | 0,0 / -0,1 / 0,0 | -0,1/0,0/ 0,1 | 0,0 / 0,0 / 0,0 | 0,0 / 0,3 / 0,1 |
| Dimensionsstabilität n.24h, - 100°C | % | -0,3 / -0,2 /-0,4 | -0,4 / -0,1 /-0,3 | -0,3 / -0,6 /-0,6 | -0,3 / -0,6 1-0,4 |
| Zellgröße (innen, Scheibe) | | 2 | 2 | 2 | 2 |
| Versprödung nach 24h, (innen, Scheibe) | | ZÄH | ZÄH | ZÄH | ZÄH |
| KBT / Klassifizierung | | E | E | E | E |
| Ø gr. Flammhöhe | mm | 120 | 130 | 116 | 138 |
| Flammhöhe min-max | mm | 120 - 120 | 130 - 130 | 110 - 125 | 130 - 140 |
| Ø zerst. Probenlänge | mm | 71,3 | 70 | 66,3 | 70 |
| Lagertest RT über 3 Monate | | ok | ok | ok | ok |

Die Versuche zeigen, dass der Einsatz der erfindungsgemäßen Isocyanat- und Isocyanuratgruppen enthaltenden Zusammensetzung ISOCYANAT 1 die Herstellung von PUR/PIR-Hartschäumen durch gewichtsanteiligen-Ersatz des konventionellen pMDI ermöglicht (d.h. ohne Anpassung des Index), wobei die PUR/PIR-Hartschäume beim Vergleich der physikalisch/mechanischen Eigenschaften und der Verarbeitungseigenschaften denen aus konventionellem pMDI hergestellten nicht nachstehen und bzgl. der Eindrucktiefe nach 2,5 Minuten und 5 Minuten deutlich überlegen sind (Beispiel 5). Das nicht erfindungsgemäße Beispiel 6* zeigt, dass eine Rückverdünnung von einem sehr hochviskosen trimerisierten pMDI (Viskosität größer 2000 mPas bei 25 °C vor der Verdünnung, siehe Herstellung von ISOCYANAT 2) zu einer Isocyanat- und Isocyanuratgruppen enthaltenden Zusammensetzung von ca. 700 mPas (ISOCYANAT 2) zwar die gleichen Vorteile bzgl. der Eindrucktiefe nach 2,5 Minuten und 5 Minuten mit sich bringt, aber der PUR/PIR Hartschaum im Brandtest nicht so gute Eigenschaften aufweist.

Beispiele 7 - 9: Herstellung von Verbundelementen mit Stahldeckschicht am Doppelband

Mit den Isocyanatkomponenten ISOCYANAT 1, ISOCYANAT 2 und MDI700 wurden jeweils Versuche im industriellen Maßstab am Doppeltransportband mit Stahldeckschicht (sogenannte Metal-Panel; Tabelle 3) durchgeführt.

Die Versuchsbedingungen, Einsatzstoffe und Resultat sind in Tabelle 3 zusammengestellt.

Die Ergebnisse zeigen, dass der Einsatz der erfindungsgemäßen Isocyanat- und Isocyanuratgruppen enthaltenden Zusammensetzung ISOCYANAT 1 die Herstellung von Verbundelementen mit PUR/PIR-Hartschäumen durch gewichtsanteiligen Ersatz des konventionellem pMDI ermöglicht (d.h. ohne Anpassung des Index), mit vergleichbaren physikalisch/mechanischen Eigenschaften und Verarbeitungseigenschaften (Beispiel 8). Das nicht erfindungsgemäße Beispiel 9* zeigt, dass der Einsatz eine Rückverdünnung von einem sehr hochviskosen trimerisierten pMDI (Viskosität größer 2000 mPas bei 25 °C vor der Verdünnung, siehe Herstellung von ISOCYANAT 2) zu einer Isocyanatund Isocyanuratgruppen enthaltenden Zusammensetzung von ca. 700 mPas (ISOCYANAT 2), zwar zu gleichen mechanischen Eigenschaften, aber zu unerwünschten Störungen an der Blechunterseite führt und im Brandtest nicht so gut abschneidet.

Tabelle 3: Verbundelemente mit Stahldeckschicht am Doppelband

| Parameter | | Beispiel 7* | Beispiel 8 | Beispiel 9* |
|---|---|---|---|---|
| Deckschichttemp. (oben/unten) | [°C] | 35-40/35-40 | 35-40/35-40 | 35-40/35-40 |
| Bandtemperatur (oben/unten) | [°C] | 60 / 60 | 60 / 60 | 60 / 60 |
| Corona (oben/unten) | | aus / an | aus / an | aus / an |
| Corona Leistung (oben/unten) | [kW] | aus / 4 | aus / 4 | aus / 4 |
| Profilierung (oben/unten) | | an / an | an / an | an / an |
| HAFTVERMITTLER | | ja | ja | Ja |
| Gesamtaustrag Haftvermittler | [g/m$^2$] | 100 | 100 | 100 |
| Plattendicke / Breite | [mm] | 200 / 1000 | 200/ 1000 | 200/ 1000 |
| Index (100 NCO/OH) | | 332 | 331 | 330 |
| POLYOLMISCHUNG 1 | Gew.-Tle. | 100,0 | 100,0 | 100,0 |
| Tegostab B 8443 | Gew.-Tle. | 2,5 | 2,5 | 2,5 |
| Desmorapid DB | Gew.-Tle. | 1,8 | 1,8 | 1,8 |
| Desmorapid 1792 | Gew.-Tle. | 2,0 | 1,8 | 1,8 |
| n-Pentan | Gew.-Tle. | 14,2 | 14,4 | 14,4 |
| MDI700 | Gew.-Tle. | 200 | | |
| ISOCYANAT 1 | Gew.-Tle. | | 205 | |
| ISOCYANAT 2 | Gew.-Tle. | | | 205 |
| Gesamtaustrag Schaumrezeptur | [kg/min] | 27,20 | 27,20 | 27,20 |
| Startzeit | [s] | 12 - 13 | 12 | 12 |
| Abbindezeit | [s] | 39 | 40 | 39 |
| Klebfreizeit | [s] | 55 | 60 | 56 |
| Plattenrohdichte (DIN EN ISO 845) | [kg/m$^3$] | 37,9 | 37,5 | 37,5 |
| Deckschichttemperatur (oben/unten) | [°C] | 38 138 | 38 138 | 38 / 38 |
| Härte am Bandausgang | | gut | gut | gut |
| Wärmeleitfähigkeit (10°C, 0-Wert) | [mW/Km] | 20,52 | 20,53 | 20,61 |
| Dimensionsstabilität n.24h, 100°C | [%] | -0,1/-0,8/1,5 | 0,1/-0,9/1,4 | 0,1/-0,9/1,2 |
| Dimensionsstabilität n.24h, -22°C | [%] | 0,1/0,0/0,1 | 0,2/0,0/0,1 | 0,2/0,0/0,1 |
| Störungen am Blech (Oberseite) | | Störungsfrei | Störungsfrei | Störungsfrei |
| Störungen am Blech (Unterseite) | | Störungsfrei | Störungsfrei | Lunker |
| Schweizer Brandtest BVD nach SAR585.113 | | | | |
| Brennbarkeitsgrad | | 3 | 3 | 3 |

(fortgesetzt)

| Parameter | | Beispiel 7* | Beispiel 8 | Beispiel 9* |
|---|---|---|---|---|
| Ø Flammenhöhe | [mm] | 155 | 145 | 157 |
| Extremwerte | [mm] | 150 - 160 | 140 - 150 | 155 - 160 |

Beispiele 10 - 12: Herstellung von Verbundelementen mit Aluminiumdeckschicht am Doppelband

Die Versuche im industriellen Maßstab am Doppeltransportband mit Aluminiumdeckschicht (sogenannte Insulation-Boards; Tabelle 4) zeigen, dass der Einsatz der erfindungsgemäßen Isocyanat- und Isocyanuratgruppen enthaltenden Zusammensetzung ISOCYANAT 1 die Herstellung von Verbundelementen mit PUR/PIR-Hartschäumen durch gewichtsanteiligen Ersatz des konventionellem pMDI ermöglicht (d.h. ohne Anpassung des Index), mit vergleichbaren physikalisch/mechanischen Eigenschaften und Verarbeitungseigenschaften (Beispiel 11). Das nicht erfindungsgemäße Beispiel 12* zeigt, dass bei Einsatz eines rückverdünnten, aber vor der Rückverdünnung sehr hochviskosen trimerisierten pMDI (Viskosität größer 2000 mPas bei 25 °C vor der Verdünnung, siehe Herstellung von ISOCYANAT 2) zu einer Isocyanat- und Isocyanuratgruppen enthaltenden Zusammensetzung von ca. 700 mPas (ISOCYANAT 2) zwar zu gleichen mechanischen Eigenschaften, aber zu unerwünschten Störungen an der Deckschicht führen und die Compression Strength (Druckfestigkeit) im erfindungsgemäßen Beispiel 11 sowohl dem Vergleichsbeispiel 10* mit konventionellem pMDI als auch dem Vergleichsbeispiel 12* überlegen ist.

Zusammenfassend ist festzustellen, dass der Einsatz der erfindungsgemäßen Isocyanat- und Isocyanuratgruppen enthaltende Zusammensetzung ISOCYANAT 1 im Vergleich zum konventionellem MDI700 und zur nicht erfindungsgemäßen Isocyanuratgruppen enthaltenden Zusammensetzung ISOCYANAT 2 Vorteile bzgl. der Stapelbarkeit der Schaumplatten bzw. der Anfangsfestigkeit gemessen als Eindrucktiefe nach 2,5 Minuten und 5 Minuten, im Hinblick auf die Qualität der Verbundelemente (insbesondere der Oberflächen) und im Flammschutz ergibt.

Tabelle 4: Verschäumung am Doppeltransportband mit Aluminiumdeckschichten

| Parameter | Einheit | Beispiel 10* | Beispiel 11 | Beispiel 12* |
|---|---|---|---|---|
| POLYOL 5 | Gew.-Tle. | 83,4 | 83,4 | 83,4 |
| TCPP | Gew.-Tle. | 16,6 | 16,6 | 16,6 |
| Wasser | Gew.-Tle. | 1,3 | 1,3 | 1,3 |
| B8421 | Gew.-Tle. | 2,2 | 2,2 | 2,2 |
| Desmorapid PV | Gew.-Tle. | 1,1 | 1,1 | 1,1 |
| Desmorapid 1792 | Gew.-Tle. | 0,5 | 0,5 | 0,5 |
| Kosmos 75 MEG | Gew.-Tle. | 4,2 | 4,2 | 4,2 |
| Cyclopentan | Gew.-Tle. | 4,7 | 4,7 | 4,7 |
| Isopentan | Gew.-Tle. | 10,9 | 10,9 | 10,9 |
| MDI700 | Gew.-Tle. | 245,9 | | |
| ISOCYANAT 1 | Gew.-Tle. | | 245,9 | |
| ISOCYANAT 2 | Gew.-Tle. | | | 245,9 |
| Index (100 NCO/OH) | | 324,0 | 314,0 | 314,0 |
| Bandgeschwindigkeit | [m/min] | 12,5 | 12,5 | 12,5 |
| Startzeit | [s] | 3 | 3 | 5 |
| Abbindezeit | [s] | 10 | 11 | 11 |
| Klebfreizeit | [s] | 15 | 15 | 16 |
| Kontaktzeit | [s] | 8 | 9 | 9 |
| Plattendicke | [mm] | 100 | 100 | 100 |
| Dimensionsstabilität n. 24h, 100°C | [%] | -0,3/-0,5/0,2 | -0,3/-0,5/1,0 | -1,0/-0,4/0,4 |

(fortgesetzt)

| Parameter | Einheit | Beispiel 10* | Beispiel 11 | Beispiel 12* |
|---|---|---|---|---|
| Dimensionsstabilität n. 24h, -22 °C | [%] | 0,0/0,1/-0,1 | 0,0/0,1/-0,3 | 0,1/0,1/0,0 |
| Compression Strength | 10%-Wert [MPa] | 0,149 | 0,163 | 0,148 |
| | E-Modul [MPa] | 3,7 | 4,0 | 3,7 |
| Plattenrohdichte | [kg/m$^3$] | 29,52 | 29,57 | 29,11 |
| Wärmeleitfähigkeit (70°C, 0-Wert) | [mW/Km] | 19,6 | 19,7 | 19,7 |
| KBT | Klassifizierung | E | E | E |
| max. Flammenhöhe | [mm] | 100 | 93 | 99 |
| Störungen an Deckschicht (Oberseite) | | gering | gering | stark |
| Störungen an Deckschicht (Unterseite) | | gering | gering | mittel |

## Patentansprüche

1. Verfahren zur Herstellung einer Isocyanat- und Isocyanuratgruppen enthaltenden Zusammensetzung **A2,** umfassend die Schritte:

   1) Reagierenlassen eines Polyisocyanats **A1** in Gegenwart eines Trimerisierungskatalysators und
   2) Abstoppen des Trimerisierungskatalysators mittels eines geeigneten Stoppers unter Erhalt der Zusammensetzung **A2;**
   wobei es sich bei dem in Schritt 1) eingesetzten Polyisocyanats **A1** um polymeres MDI mit einem Gehalt an monomeren Diphenylmethandiisocyanat von < 55 Gew.-% und einer Viskosität von 100 bis 400 mPa*s bei 25 °C handelt und
   wobei Schritt 2) durchgeführt wird, wenn die Zusammensetzung **A2** einen Isocyanuratgruppen - Anteil von 5 - <15 Gew.-% Isocyanuratgruppen aufweist und die Viskosität von **A2** < 2000 mPa*s bei 25 °C (bestimmt nach DIN 53019-1:2008-09, ohne Lösemittel) beträgt.

2. Verfahren gemäß Anspruch 1, wobei das eingesetzte Polyisocyanat **A1** ≤ 50 Gew.-% monomeres MDI und eine Viskosität von 100 bis 400 mPa*s bei 25 °C, bevorzugt von 120 bis 350 mPa*s bei 25 °C, besonders bevorzugt von 130 bis 300 mPa*s bei 25 °C (bestimmt nach DIN 53019-1:2008-09, ohne Lösemittel), aufweist.

3. Isocyanat- und Isocyanuratgruppen enthaltende Zusammensetzung **A2,** erhältlich durch ein Verfahren gemäß einem der Ansprüche 1 bis 2.

4. Zusammensetzung **A2** gemäß Anspruch 3, **dadurch gekennzeichnet, dass** sie 5 - 13 Gew.-% Isocyanuratgruppen aufweist.

5. Zusammensetzung **A2** gemäß Anspruch 3 oder 4, **dadurch gekennzeichnet, dass** sie im GPC einen siebten Peak zugehörend zu der Fraktion mit dem siebtniedrigsten Molekulargewicht aufweist, dessen Peakfläche > 4,6 Flächen-% beträgt.

6. Zusammensetzung **A2** gemäß einem der Ansprüche 3, 4 oder 5, weist ein zahlengemitteltes Molekulargewicht Mn von >350 g/mol auf.

7. Zusammensetzung **A2** gemäß einem der Ansprüche 3 bis 6, **dadurch gekennzeichnet, dass** sie eine Viskosität von < 1000 mPa*s bei 25 °C (bestimmt nach DIN 53019-1:2008-09, ohne Lösemittel) aufweist.

8. Eine Isocyanatkomponente **A** umfassend eine Zusammensetzung **A2** gemäß einem der Ansprüche 3 bis 7.

9. PUR/PIR-System zur Herstellung eines PUR/PIR - Hartschaumstoffs aus einer Isocyanatkomponente **A** gemäß Anspruch 8 und eine Polyolformulierung **B** in Gegenwart von Treibmitteln **C** und optional Katalysatoren **D** sowie Hilfs- und Zusatzstoffe **E.**

**10.** PUR/PIR-System gemäß Anspruch 9, **dadurch gekennzeichnet, dass** die Isocyanat-Kennzahl des Schaums $\geq$ 250 bis $\leq$ 450, bevorzugt $\geq$ 320 bis $\leq$ 400 beträgt.

**11.** Verfahren zur Herstellung eines PUR/PIR-Hartschaumstoffes durch Umsetzung eines PUR/PIR-Systems gemäß Anspruch 9 oder 10.

**12.** PUR/PIR-Hartschaumstoff, erhältlich durch ein Verfahren gemäß Anspruch 11.

**13.** Verwendung eines PUR/PIR-Hartschaumstoffes gemäß Anspruch 12 als Isolationsschaum in der Herstellung von Verbundelementen.

**14.** Verbundelement, umfassend eine Hartschaumschicht, welche einen PUR/PIR-Hartschaumstoff gemäß Anspruch 12 enthält, sowie mindestens eine Deckschicht.

**15.** Verbundelement gemäß Anspruch 14, wobei das Material der Deckschicht Aluminium, Stahl, Bitumen, Papier, ein Mineral-Vliesstoff, ein organische Fasern umfassender Vliesstoff, eine Kunststoff-Platte, eine Kunststoff-Folie und/oder eine Holzplatte ist.

Europäisches
Patentamt

European
Patent Office

Office européen
des brevets

**EUROPÄISCHER RECHERCHENBERICHT**

**Nummer der Anmeldung**

**EP 22 21 2997**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H06 256460 A (NIPPON POLYURETHANE KOGYO KK) 13. September 1994 (1994-09-13) * Absätze [0029], [0051], [0054]; Tabellen 4-7 * ----- | 1-15 | INV. C08G18/18 C08G18/22 C08G18/40 C08G18/42 |
| A | JP 2008 260843 A (NIPPON POLYURETHANE KOGYO KK) 30. Oktober 2008 (2008-10-30) * Absatz [0036] * ----- | 1-15 | C08G18/48 C08G18/76 C08G18/79 B32B15/18 |
| X | JP H08 73557 A (NIPPON POLYURETHANE KOGYO KK) 19. März 1996 (1996-03-19) * Absatz [0029]; Beispiele 2,3,7-10,14,17-20,24; Tabellen 1-4,6 * ----- | 1-15 | B32B27/06 C08G18/02 |
| X | JP H08 92346 A (NIPPON POLYURETHANE KOGYO KK) 9. April 1996 (1996-04-09) * Absatz [0029]; Beispiele 1-3,5,10-12,14,20-23,25,31; Tabellen 1,2,5-7,9 * ----- | 1-15 | |
| X | JP H08 120048 A (NIPPON POLYURETHANE KOGYO KK) 14. Mai 1996 (1996-05-14) * Vergleichsbeispiele 1,3,5; Absatz [0034]; Tabellen 3,4,6,9 * ----- | 1-15 | **RECHERCHIERTE SACHGEBIETE (IPC)** C08G B32B |
| X | JP S59 163357 A (INOUE MTP KK) 14. September 1984 (1984-09-14) * Beispiele 1-7,12-15 * * Zusammenfassung * * Seite 418, linke Spalte, letzter Absatz * ----- | 1-15 | |
| X | DE 691 16 583 T2 (ICI PLC [GB]) 27. Juni 1996 (1996-06-27) * Seite 1, Zeilen 12-15; Beispiele 1,2 * ----- | 1-15 | |

-/--

Der vorliegende Recherchenbericht wurde für alle Patentansprüche erstellt

| Recherchenort | Abschlußdatum der Recherche | Prüfer |
|---|---|---|
| München | 4. Mai 2023 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

**EP 22 21 2997**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 974 460 A1 (COVESTRO DEUTSCHLAND AG [DE]) 30. März 2022 (2022-03-30) * Beispiele 1,2 * ----- | 1-15 | |
| X | WO 2020/221662 A1 (COVESTRO INTELLECTUAL PROPERTY GMBH & CO KG [DE]) 5. November 2020 (2020-11-05) * Beispiele 1-3 * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| **München** | **4. Mai 2023** | **Lanz, Sandra** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 21 2997

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2023

| Im Recherchenbericht angeführtes Patentdokument | Datum der Veröffentlichung | Mitglied(er) der Patentfamilie | Datum der Veröffentlichung |
|---|---|---|---|
| JP H06256460 A | 13-09-1994 | JP 3371480 B2<br>JP H06256460 A | 27-01-2003<br>13-09-1994 |
| JP 2008260843 A | 30-10-2008 | JP 5311267 B2<br>JP 2008260843 A | 09-10-2013<br>30-10-2008 |
| JP H0873557 A | 19-03-1996 | KEINE | |
| JP H0892346 A | 09-04-1996 | KEINE | |
| JP H08120048 A | 14-05-1996 | KEINE | |
| JP S59163357 A | 14-09-1984 | JP H0347266 B2<br>JP S59163357 A | 18-07-1991<br>14-09-1984 |
| DE 69116583 T2 | 27-06-1996 | AT 133431 T<br>AU 645290 B2<br>CA 2037378 A1<br>DE 69116583 T2<br>EP 0447093 A2<br>ES 2082130 T3<br>FI 910954 A<br>HK 191396 A<br>JP 3126993 B2<br>JP H04220421 A | 15-02-1996<br>13-01-1994<br>08-09-1991<br>27-06-1996<br>18-09-1991<br>16-03-1996<br>08-09-1991<br>25-10-1996<br>22-01-2001<br>11-08-1992 |
| EP 3974460 A1 | 30-03-2022 | KEINE | |
| WO 2020221662 A1 | 05-11-2020 | EP 3962983 A1<br>JP 2022531206 A<br>WO 2020221662 A1 | 09-03-2022<br>06-07-2022<br>05-11-2020 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4743627 A
- US 2009105359 A1
- WO 2017046274 A1
- WO 2009039332 A